(19) Europäisches Patentamt
European Patent Office
Office européen des brevets

(11) EP 2 359 342 B1

(12) EUROPEAN PATENT SPECIFICATION

(45) Date of publication and mention
of the grant of the patent:
**09.01.2019 Bulletin 2019/02**

(51) Int Cl.:
***G07C 5/08*** (2006.01)   ***B60T 8/00*** (2006.01)

(21) Application number: **09827821.1**

(22) Date of filing: **10.11.2009**

(86) International application number:
**PCT/SE2009/051279**

(87) International publication number:
**WO 2010/059108 (27.05.2010 Gazette 2010/21)**

(54) **BRAKE FEEDBACK SYSTEM**

BREMSRÜCKKOPPELUNGSSYSTEM

SYSTÈME DE RETOUR DE FREINAGE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **21.11.2008 SE 0850088**

(43) Date of publication of application:
**24.08.2011 Bulletin 2011/34**

(73) Proprietor: **Scania CV AB (publ)**
**151 87 Södertälje (SE)**

(72) Inventors:
• **ANDERSSON, Jonny**
**SE-151 68 Södertälje (SE)**
• **BREDBERG, Linus**
**S-151 46 Södertälje (SE)**
• **ANDERSSON, Jon**
**S-151 46 Södertälje (SE)**

(74) Representative: **Scania CV AB**
**Patents, GP 117kv**
**151 87 Södertälje (SE)**

(56) References cited:
WO-A1-02/083473        WO-A1-2007/139493
WO-A1-2007/139494      WO-A1-2007/139494
WO-A2-2007/140232      US-A- 6 092 021
US-A1- 2003 191 573    US-A1- 2008 257 656

EP 2 359 342 B1

**Description**

Field of the invention

The present invention relates to a brake feedback system according to the preamble of the independent claim.

Background of the invention

When driving heavy vehicles, such as trucks, buses and the like, the vehicle economy has become an important factor when trying to reduce costs in the business in which the vehicle is used. Following the acquiring cost of the vehicle, the largest items of expenditure for a vehicle consist of fuel costs and service costs. These costs are often connected, i.e. a vehicle that is heavily used consumes more fuel and is exposed to greater wear with increasing service costs as a consequence.

An existing problem for the companies that use heavy vehicles in their business is nevertheless that it is difficult to establish how great the fuel consumption and wear that e.g. is derived from incautious driving is, and how great the amount that is derived from unfavourable traffic surroundings, such as extremely undulated ground and/or urban environment is.

The wear a vehicle is exposed to during incautious driving is substantially due to wear of the brake systems of the vehicle. A heavy vehicle often comprises a number of different brake systems, such as service (foot) brake, motor brake, exhaust brake, retarder and other types of auxiliary brakes. From a wear point of view, braking actions with auxiliary brakes are preferred since these usually are less stressing for the vehicle. By using auxiliary brakes on heavy vehicles the driver may reduce the wear on brake lining, brake drums etc. that are associated with the use of wheel brakes. If e.g. only the service brake is used when a heavily loaded vehicle is driven on a very long downhill slope, this may result in disastrous consequences because of overheated brake discs and/or drums and/or brake linings. The use of auxiliary brakes should thus be encouraged to make the driver's use of them more frequent.

The international application WO 2007/139494 discloses a device for determining the ability of a vehicle driver to choose a brake system. The driver's use of a brake system is compared to the driver's total use of the brake systems during a braking action for assessing the driver's ability to use the brake system. The use of a system is measured as dissipated energy or usage time of the system.

The US application 2006/0113833 discloses a method and apparatus for distributing brake torque between at least a first and a second braking device. The distribution of brake torque takes account of brake torque required and also the maximum brake torque the first braking device and the second braking device can deliver. The instantaneous retarder torque is measured, and this measure forms part of the calculation of the distribution of brake torque.

The object of the present invention is to obtain an improved evaluation system of the driver's use of the auxiliary brakes to be able to evaluate the driver's way of using the brakes as correct as possible. A further aim of the invention is to encourage the driver to drive in an economical way.

Summary of the invention

The above-mentioned object is achieved by a brake feedback system for a vehicle comprising a brake choice evaluation means arranged to evaluate the driver's choice of braking system, e.g. retarder and other auxiliary brakes, service brakes or engine brake by comparing the driver's use of at least one braking system, with a total use of the braking systems in the vehicle during a braking action. The driver's use of an auxiliary brake system is determined based upon a calculated value from at least one brake power model of the auxiliary brake system, and the brake choice evaluation system is arranged to grade the driver's choice of braking system and to feedback recommendations about a preferred braking system and/or function to the driver on a presentation means.

An auxiliary brake is a supplement to the ordinary wheel brakes of the vehicle and is configured to produce a retarding torque for decreasing the rotational speed of the engine crankshaft. An auxiliary brake may for instance be an engine brake, an exhaust brake, an electromagnetic retarder or a hydraulic retarder. The auxiliary brakes are advantageously used for keeping a constant speed on downhill slopes and for moderate decelerations, whereas the vehicle's ordinary wheel brakes are mainly used for powerful and sudden braking operations. With the use of auxiliary brakes, the ordinary wheel brakes, which normally constitute friction brakes of disc brake or drum brake type, are prevented from overheating with the associated risk of brake failure and the wear thereof is reduced.

On some trucks equipped with retarder and EBS (electronic brake control) there is a function called brake blending. Brake blending means that the wheel brakes and the retarder are coordinated to an optimum braking effect. When the driver demands braking by pressing down the brake pedal, the system first starts to brake with the wheel brakes. The reason is that there is a certain delay from when the retarder is activated until it gives an actual brake torque. When the retarder subsequently starts giving brake torque the brake blending function gradually decreases the wheel brakes and lets the retarder take over the braking. A benefit with this function is that the driver will immediately feel a braking response.

Preferred embodiments are set forth in the dependent claims.

Short description of the appended drawings

Figure 1 schematically illustrates a control system for a vehicle where the present invention is utilized.
Figure 2 illustrates the relationship between energies during a brake action with a theoretically calculated value of the maximum available brake power from the auxiliary brakes.

Detailed description of preferred embodiments of the invention

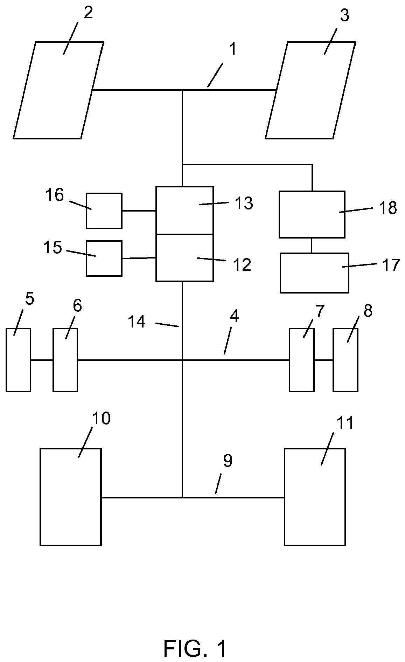

In fig. 1 is schematically illustrated a control system for a vehicle with which the present invention can be utilized. The vehicle comprises a front axle 1 with steered wheels 2, 3, a rear drive axle 4 with driven wheels 5-8, and optionally a rear axle 9 with wheels 10 and 11. Furthermore, the vehicle contains an engine 13 connected to a gear box 12, which drives the drive axle 4 by means of an output shaft 14 from the gear box. Gear box 12 and motor 13 are controlled by control units 15, 16, respectively, which are controlled by a main control unit 17. The Engine Management System (EMS) 16 controls the motor functions of the vehicle, which, for example, can consist of fuel injection and motor-brake. The control is based on a number of input signals, which can consist of signals from (not shown) throttle controls (the position of the accelerator pedal), speed sensor and brake management system. The Gearbox Management System (GMS) 15 controls the gear functions, wherein, when using an automatic gearbox, the gear shifting can be controlled based on an input signal from speed sensors, in manual gear shifting the shifting can be controlled from an input signal from a gear selector (gear shift lever).

Furthermore, the vehicle contains a Brake Management System (BMS) with a brake control unit 17, which controls the brake functions of the vehicle, such as automatic calculation of the load so that a given pedal position always can result in the same brake effect regardless of the load. The brake control unit controls the various brake systems of the vehicle, e.g. retarder and other supplementary brake systems, exhaust brake and service brake on the basis of commands from the driver, and sends control signals to system modules (not shown) dispersed on the chassis, where electrical control signals are used, e.g. to adjust brake pressure.

The above described control units constitute mere examples of what can exist in a vehicle. As is appreciated by a person skilled in the art, two or more of the above described control units can, of course, be integrated in one single control unit.

The brake feedback system 18 according to the invention includes a brake choice evaluation means, and by collecting information e.g. about the applied brake torque (dissipated energy) for respective brake system, the driver's choice of brake system can be directly evaluated in the vehicle. The system 18 includes means for receiving brake system related signals and other vehicle related signals. In the disclosed exemplary embodiment, the vehicle comprises four different kinds of brake systems, retarder, exhaust brake, service (foot) brake and motor brake, and the system 18 comprises means for receiving signals concerning these brake systems. For example, the position of a brake control set by the driver for a certain brake system can by means of the construction of the vehicle be arranged to be translated to an electric signal, which then is processed by the control system of the vehicle, or a separate control unit. The brake choice evaluation means according to the invention is arranged to evaluate the driver's choice of braking system by comparing the driver's use of at least one braking system, with a total use of the braking systems in the vehicle during a braking action. The use of a braking system may according to one embodiment be represented as power dissipated during use of the braking system.

A brake assessment value U is calculated based on the comparison, and if U exceeds a certain value, the braking action is assessed to be a good braking action, i.e. a high grade is given. The U value can represent a percentage of the, in theory, "perfect" 100 % braking action. A constant value K used in the calculations to obtain a brake assessment value can be made dependent of e.g. the inclination of the road and/or the weight of the vehicle in question.

The system 18 may receive signals representing the applied brake torque for the brake systems, respectively, i.e. brake torque from service brakes (disc or drum brake), brake torque from retarder brake, brake torque from exhaust brake and brake torque from one or a plurality of other auxiliary brakes, such as motor brake torque. By integrating these forces over the distance of the entire braking action, the total energy that is absorbed by each brake system can be determined. A brake assessment value may then be calculated as:

$$U = K \cdot \frac{(E_{\mathrm{Re}\,tarder} + E_{Exhaust\_brake} + E_{Engine\_brake})}{E_{Deceleration}} \qquad (1)$$

where $E$ represents the amount of energy that is used during a braking action for each respective brake system and for the entire brake action. A U-value can be performed for each brake system.

The higher the value of $U$ means the better usage of the brake systems during a brake action. By summing up the $U$ values of all braking actions during a vehicle's journey, and dividing with the number of braking actions, a measurement of the efficiency of the manner in which the driver uses the vehicle's different brake systems can be obtained.

The brake lining temperature and the break lining wear can also influence the $U$ value and can be accounted for in the equation (1) above by multiplication with a $S_{temp}$-factor and a $S_{lining}$-factor. These can be determined e.g. as $S_{temp} = C_1 \cdot$brake temp, and $S_{lining} = C_2 \cdot (1$-remaining lining). The surroundings of the vehicle may also be taken into account for every braking action, thus a very accurate evaluation of each braking action can be achieved.

The present invention provides a system to give feedback to the driver about his/her braking behaviour, and the evaluation of the driver's use of auxiliary brake systems is improved compared to known prior art systems, as it is determined based upon a calculated value from at least one brake power model of the auxiliary brake systems. The system further gives feedback to the driver by grading the driver's choice of braking system and by giving feedback as recommendations to the driver about a preferred braking system and/or function on a presentation means.

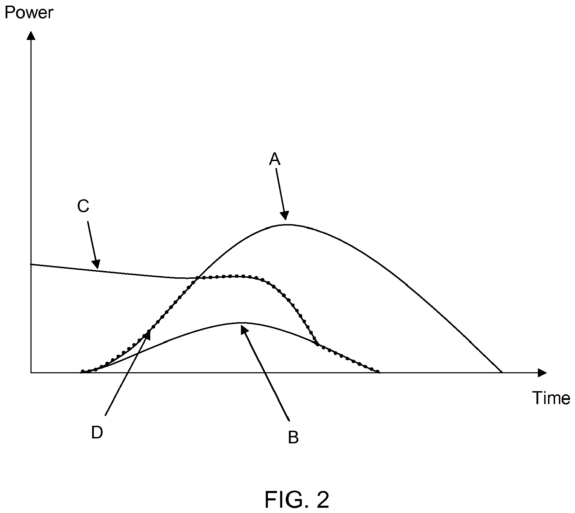

As it is not always possible to brake only with the auxiliary brakes (in absence of accessible brake torque), the driver's use of the at least one auxiliary brake is according to the invention determined by comparing used auxiliary brake power with a calculated maximum available auxiliary brake power from a brake power model. The evaluation must thus be established in the relationship between used auxiliary brake power and the actual accessible auxiliary brake power from the auxiliary brakes. The actual accessible brake power that the auxiliary brakes can deliver is dependent on various parameters, and it is not always possible to obtain the maximum braking capacity from the auxiliary brakes as e.g. the auxiliary brake power is dependent on the rotational speed of driving wheels and the auxiliary brakes requires cooling that is not always sufficient. As there is no sensor that announces which maximal torque the auxiliary brakes can brake with (it measures only actual brake effect), this has to be calculated. By inputting certain values, e.g. maximum torque, rotational speed, different temperatures etc. to an auxiliary brake model (the way the model is built up is previously known and is not further explained), a theoretical maximum auxiliary brake power value can be obtained at every moment. In fig. 2 the relationship between the total brake power (A), the actual brake power from auxiliary brakes and engine brake (B) of the vehicle and a theoretically calculated value of the maximum brake power from the auxiliary brakes (C) is illustrated at every moment. The actual brake power (B) should thus be compared to the minimum value (D, shown as a dotted line in fig. 2) of the total brake power (A) and the theoretical maximum brake power from the auxiliary brakes (C), to get a correct grade of the driver's use of the auxiliary brakes during a braking action. An assessment value U for the auxiliary brakes is thus calculated as:

$$U = \frac{A(B)}{A(D)}, \qquad (2)$$

where A(B) is the area below the actual brake power from auxiliary brakes and engine brake i.e. the energy dissipated from the auxiliary brakes and engine brake, and A(D) is the area below the D-line. By integrating the power values, energy values can be calculated for the braking action.

A certain degree of error on the calculations is permitted to make a correct evaluation. According to one embodiment, the driver's use of the auxiliary brake is thus determined by comparing used auxiliary brake power with the minimum of the calculated maximum available auxiliary brake power obtained from the brake power model and the total brake power. An improved evaluation and grade of the driver's way of using the auxiliary brakes is then obtained.

Different models may be used for the different auxiliary brake systems, e.g. the auxiliary brake power model can be any of a retarder brake power model, an exhaust brake power model or a motor brake power model.

Advantageously, the brake choice evaluation means includes certain criteria and/or thresholds for evaluating and grade the use of the auxiliary brakes. Thus, the possibility to discriminate certain situations to be able to make a better evaluation and a following grading of the driver's use of the auxiliary brakes is obtained. Examples of such situations are explained in the following.

In one embodiment, the braking action made by the driver of the vehicle is to activate a brake blending function, e.g. a mix between service brakes and an auxiliary brake. In such case, the brake choice evaluation means evaluates and grade the driver's use of the brake blending function based on the criteria that a brake torque parameter representing a brake torque from the retarder is sensed. As there is a certain delay between retarder activation and it providing an actual brake torque, these requirements give an improved evaluation of the driver's use of the function compared to known evaluation methods.

In a vehicle of the type shown in fig. 1, it is, as was previously mentioned, very important that the driver uses the correct brake system to avoid unnecessary wear, and/or unnecessary risks resulting from overloading a specific brake system. The brake choice evaluation means is thus arranged to feedback recommendations about a preferred braking system or function to the driver on a presentation means. This gives the driver the opportunity to change his/her driving behaviour. Advantageously, if a preferred brake function is not activated when braking; a recommendation is shown on the presentation means after the braking to activate the preferred brake function. One such braking function may be the brake blending function. As the brake blending function helps relieving the wheel brakes, the usage of the function shall be encouraged. After a performed braking with this function deactivated, a recommendation shall thus be shown to a driver, where he/she is encouraged to activate this function.

One discriminated situation is if the temperature outside the vehicle is below a certain threshold. Then the brake choice evaluation means does not evaluate or grade the driver's use of the auxiliary brakes, and does also not recommend any preferred braking system to the driver. This situation is discriminated, as the auxiliary brakes only brakes with effect on the driving shaft. At circumstances when the state of the road is slippery, or can be assumed to be slippery (close to 0°C), or when the temperature is below 0°C, the driver shall not be demanded to use the auxiliary brakes, because a traffic dangerous situation may then occur. Consequently, no evaluation or grading shall be made and no recommendation shall be shown to the driver under these circumstances. Also, if the driver has deactivated the brake blending function because the temperature outside the vehicle is close to or below 0°C, no grading of the driver should be made, and no recommendations should be presented to the driver.

In one embodiment, the system 18 is arranged to evaluate and grade the driver's choice of brake system in dependence of at least one influencing parameter, e.g. a vehicle surrounding parameter. This vehicle surrounding parameter may be a parameter taking the type of road segments into consideration, e.g. a left-hand turn, straight stretch etc. It is thus possible to evaluate and grade how the driver has accomplished certain road segments with the brakes.

The system 18 includes all necessary computer programs and hardware to perform the necessary steps to give feedback to the driver according to the present invention.

**Claims**

1.  Brake feedback system for a vehicle, comprising:

    a brake choice evaluation means arranged to evaluate the driver's choice of braking action, e.g. use of auxiliary brakes, service brakes or engine brake, by comparing the driver's use of at least one braking system, with a total use of the braking systems in the vehicle during a braking action,

    **characterized in** by that the driver's use of an auxiliary brake system is determined based upon a calculated value from at least one brake power model of the auxiliary brake system, and wherein said brake choice evaluation system is arranged to grade the driver's choice of braking system and to feedback recommendations about a preferred braking system and/or function to the driver on a presentation means.

2.  Brake feedback system according to claim 1, wherein the driver's use of said auxiliary brake is determined by comparing used auxiliary brake power with a calculated maximum available auxiliary brake power obtained from said brake power model.

3.  Brake feedback system according to claim 1, wherein the driver's use of said auxiliary brake is determined by comparing used auxiliary brake torque with the minimum of the calculated maximum available auxiliary brake power obtained from said brake power model and the total brake power.

4.  Brake feedback system according to claim 1, 2 or 3, wherein said brake power model is any of a retarder brake power model, an exhaust brake power model or a motor brake power model.

5.  Brake feedback system according to any of the preceding claims, wherein said brake choice evaluation means comprises certain criteria and/or thresholds for evaluating and grade the use of the auxiliary brakes.

6.  Brake feedback system according to any of the preceding claims, wherein said braking action is a brake blending function, e.g. a mix between service brakes and an auxiliary brake.

7.  Brake feedback system according to claim 5 and 6, wherein said brake choice evaluation means evaluates and grades the driver's use of the brake blending function based upon the criteria that a brake torque parameter representing a brake torque from the retarder is sensed.

8. Brake feedback system according to claim 1, wherein if a preferred brake function is not activated when braking, a recommendation is shown on said presentation means after said braking to activate said preferred brake function.

9. Brake feedback system according to claim 5, wherein if the temperature outside the vehicle is below a certain threshold, the brake choice evaluation means does not evaluate or grade the driver's use of said auxiliary brakes, and does also not recommend any preferred braking system to the driver.

10. Brake feedback system according to claim 5, wherein the system is arranged to evaluate and grade the driver's choice of brake system in dependence of at least one influencing parameter, e.g. a vehicle surrounding parameter.

11. Brake feedback system according to any of the preceding claims, wherein said use of braking system is represented as power dissipated during use of the braking system or usage time of the braking system.

12. Vehicle comprising a brake feedback system according to any of the preceding claims.

**Patentansprüche**

1. Bremsrückkopplungssystem für ein Fahrzeug, aufweisend:

   ein Mittel zur Bewertung der Bremsenwahl, das zur Bewertung der Wahl des Fahrers der Bremsmaßnahme eingerichtet ist, z. B. des Einsatzes der Hilfsbremsen, der Betriebsbremsen oder der Motorbremse, durch Vergleichen des Einsatzes des Fahrers mindestens eines Bremssystems mit dem Gesamteinsatz der Bremssysteme im Fahrzeug während einer Bremsung,

   **dadurch gekennzeichnet, dass** der Einsatz des Hilfsbremssystems durch den Fahrer auf Basis eines berechneten Wertes aus mindestens einem Bremskraftmodell des Hilfsbremssystems bestimmt wird, und wobei das Bremsenwahl-Bewertungssystem dazu eingerichtet ist, die Wahl des Bremssystems durch den Fahrer einzustufen und Empfehlungen für ein bevorzugtes Bremssystem und/oder eine bevorzugte Funktion an den Fahrer auf einem Darstellungsmittel zurückzugeben.

2. Bremsrückkopplungssystem nach Anspruch 1, wobei der Einsatz der Hilfsbremse durch den Fahrer bestimmt wird durch Vergleichen der verwendeten Hilfsbremskraft mit einer berechneten maximal verfügbaren Hilfsbremskraft, die aus dem Bremskraftmodell erhalten wird.

3. Bremsrückkopplungssystem nach Anspruch 1, wobei der Einsatz der Hilfsbremse durch den Fahrer bestimmt wird durch Vergleichen des verwendeten Hilfsbremsmoments mit dem Mindestwert des berechneten Maximums der verfügbaren Hilfsbremskraft, die aus dem Bremskraftmodell erhalten wird, und der Gesamtbremskraft.

4. Bremsrückkopplungssystem nach Anspruch 1, 2 oder 3, wobei das Bremskraftmodell entweder ein Retarder-Bremskraftmodell, ein Abgas-Bremskraftmodell oder ein Motor-Bremskraftmodell ist.

5. Bremsrückkopplungssystem nach einem der vorigen Ansprüche, wobei das Mittel zur Bewertung der Bremswahl bestimmte Kriterien und/oder Schwellenwerte zur Bewertung und Einstufung des Einsatzes der Hilfsbremsen aufweist.

6. Bremsrückkopplungssystem nach einem der vorigen Ansprüche, wobei die Bremsmaßnahme eine gemischte Bremsfunktion ist, z. B. ein Zusammenwirken von Betriebsbremsen und einer Hilfsbremse.

7. Bremsrückkopplungssystem nach den Ansprüchen 5 und 6, wobei das Mittel zur Bewertung der Bremsenwahl den Einsatz der gemischten Bremsfunktion durch den Fahrer auf Basis der Kriterien bewertet und derart einstuft, dass ein Bremsmomentparameter, der ein Bremsmoment vom Retarder repräsentiert, erfasst wird.

8. Bremsrückkopplungssystem nach Anspruch 1, wobei dann, wenn eine bevorzugte Bremsfunktion beim Bremsen nicht aktiviert wird, eine Empfehlung auf dem Darstellungsmittel nach dem Bremsen gezeigt wird, um die bevorzugte Bremsfunktion zu aktivieren.

9. Bremsrückkopplungssystem nach Anspruch 5, wobei dann, wenn die Temperatur außerhalb des Fahrzeugs unter einem bestimmten Schwellenwert liegt, das Mittel zur Bewertung der Bremsenwahl den Einsatz der Hilfsbremsen durch den Fahrer nicht bewertet oder einstuft und auch dem Fahrer kein bevorzugtes Bremssystem empfiehlt.

10. Bremsrückkopplungssystem nach Anspruch 5, wobei das System zum Bewerten und Einstufen der Wahl des Bremssystems durch den Fahrer in Abhängigkeit von mindestens einem beeinflussenden Parameter, z. B. einem Parameter der Fahrzeugumgebung, eingerichtet ist.

11. Bremsrückkopplungssystem nach einem der vorigen Ansprüche, wobei der Einsatz des Bremssystems als Verlustleistung während des Einsatzes des Bremssystems oder der Einsatzzeit des Bremssystems repräsentiert wird.

12. Fahrzeug mit einem Bremsrückkopplungssystem nach einem der vorigen Ansprüche.

## Revendications

1. Système de retour de freinage pour un véhicule, comprenant :

   un moyen d'évaluation de choix de freinage conçu pour évaluer le choix du conducteur concernant une action de freinage, par exemple l'utilisation de freins auxiliaires, de freins de service ou du frein moteur, en comparant l'utilisation par le conducteur d'au moins un système de freinage à une utilisation totale des systèmes de freinage du véhicule pendant une action de freinage,
   **caractérisé en ce que** l'utilisation par le conducteur d'un système de freinage auxiliaire est déterminé en fonction d'une valeur calculée à partir d'au moins un modèle de puissance de freinage du système de freinage auxiliaire, et dans lequel ledit système d'évaluation de choix de freinage est conçu pour noter le choix du système de freinage par le conducteur et pour envoyer en retour des recommandations concernant un système et/ou une fonction de freinage préférés sur un moyen d'affichage.

2. Système de retour de freinage selon la revendication 1, dans lequel l'utilisation par le conducteur dudit frein auxiliaire est déterminée par comparaison de la puissance de freinage auxiliaire utilisée à une puissance de freinage auxiliaire disponible maximale calculée obtenue à partir dudit modèle de puissance de freinage.

3. Système de retour de freinage selon la revendication 1, dans lequel l'utilisation par le conducteur dudit frein auxiliaire est déterminée par comparaison du couple de freinage auxiliaire utilisé au minimum de la puissance de freinage auxiliaire disponible maximale calculée obtenue à partir dudit modèle de puissance de freinage et de la puissance de freinage totale.

4. Système de retour de freinage selon la revendication 1, 2 ou 3, dans lequel ledit modèle de puissance de freinage est l'un parmi un modèle de puissance de frein ralentisseur, un modèle de puissance de frein d'échappement ou un modèle de puissance de frein moteur.

5. Système de retour de freinage selon l'une quelconque des revendications précédentes, dans lequel ledit moyen d'évaluation de choix de freinage comprend certains critères et/ou seuils pour l'évaluation et la notation de l'utilisation des freins auxiliaires.

6. Système de retour de freinage selon l'une quelconque des revendications précédentes, dans lequel ladite action de freinage est une fonction de mélange de freins, par exemple un mélange entre les freins de service et un frein auxiliaire.

7. Système de retour de freinage selon les revendications 5 et 6, dans lequel ledit moyen d'évaluation de choix de freinage évalue et note l'utilisation par le conducteur de la fonction de mélange de freins en fonction du critère selon lequel un paramètre de couple de freinage représentant un couple de freinage fourni par le ralentisseur est détecté.

8. Système de retour de freinage selon la revendication 1, dans lequel, si une fonction de freinage préférée n'est pas activée lors du freinage, une recommandation est affichée sur lesdits moyens d'affichage après ledit freinage pour activer ladite fonction de freinage préférée.

9. Système de retour de freinage selon la revendication 5, dans lequel, si la température à l'extérieur du véhicule est inférieure à un certain seuil, le moyen d'évaluation de choix de freinage n'évalue pas ou ne note pas l'utilisation par le conducteur desdits freins auxiliaires, et ne recommande non plus aucun système de freinage préféré au conducteur.

10. Système de retour de freinage selon la revendication 5, dans lequel le système est conçu pour évaluer et noter le choix du système de freinage par le conducteur en fonction d'au moins un paramètre influent, par exemple un paramètre d'environnement du véhicule.

11. Système de retour de freinage selon l'une quelconque des revendications précédentes, dans lequel ladite utilisation du système de freinage est représentée comme la puissance dissipée pendant l'utilisation du système de freinage ou le temps d'utilisation du système de freinage.

12. véhicule comprenant un système de retour de freinage selon l'une quelconque des revendications précédentes.

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007139494 A

- US 20060113833 A